(19) Europäisches Patentamt / European Patent Office / Office européen des brevets

(11) EP 2 957 590 A1

(12) **EUROPEAN PATENT APPLICATION**

(43) Date of publication:
**23.12.2015 Bulletin 2015/52**

(21) Application number: **14002123.9**

(22) Date of filing: **20.06.2014**

(51) Int Cl.:
***C08K 5/20*** *(2006.01)* ***C08L 23/00*** *(2006.01)*
***C08L 25/00*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **Clariant International Ltd.**
  **4132 Muttenz (CH)**
- **Clariant Masterbatches (Italia) S.p.A.**
  **20010 Pogliano Milanese (IT)**

(72) Inventors:
- **Decortes, Antonello**
  **20149 Milan (IT)**
- **Steffanut, Pascal**
  **68128 Village-Neuf (FR)**
- **Marson, Angelica**
  **4053 Basel (CH)**
- **Fava, Flavio**
  **20015 Parabiago (MI) (IT)**
- **Muller, Thierry**
  **9026 Ettelbruck (LU)**

(74) Representative: **Hütter, Klaus et al**
**Clariant Produkte (Deutschland) GmbH**
**Patent Management**
**Industriepark Höchst, G 860**
**65926 Frankfurt am Main (DE)**

(54) **Oxygen barrier plastic material**

(57) The invention relates to use of an additive as oxygen barrier in a plastic material wherein
(a) the plastic material is a polyolefin, a polyolefin copolymer or a polystyrene, and the additive is (b) and optionally (c):
(b) a compound of formula (I);

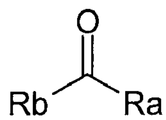

**(I)**

wherein
Ra
represents $C_7$-$C_{20}$ alkyl, $C_6$-$C_{10}$ aryl, $C_4$-$C_{10}$ heteroaryl, wherein the heteroatoms are N, O and/or S, ($C_2$-$C_6$)-alkenylen-($C_6$-$C_{10}$) aryl, $C_1$-$C_6$-alkylen-$C_6$-$C_{10}$-aryl, the aryl and heteroaryl radicals optionally being substituted by: hydroxyl, $C_1$-$C_6$-alkyl, $C_1$-$C_6$ alkoxyl, $C_6$-$C_{10}$ aryloxy, halogen, cyano, nitro, $C_6$-$C_{10}$-aryl, di($C_1$-$C_6$)alkylamino, ($C_1$-$C_6$) alkylthio, $C_6$-$C_{10}$-arylthio, =O, =S, $SO_3H$, $SO_2NR^1R^2$, $CO_2R^3$, $CONR^1R^2$, $NHCOR^4$, CO-$C_6$-$C_{10}$-aryl or a combination thereof, wherein $R^1$, $R^2$, $R^3$, $R^4$ are the same or different and independently represent hydrogen or $C_1$-$C_6$-alkyl;
Rb
represents a group selected from the moieties of formula (II), (III), (IV), (V), (VI) and (VII);

EP 2 957 590 A1

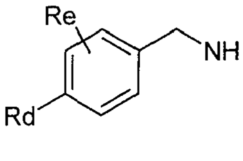

(II)

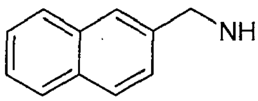

(III)

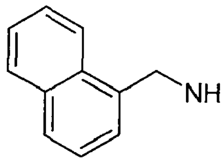

(IV)

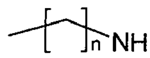

(V)

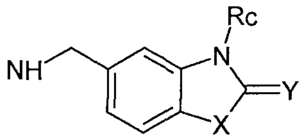

(VI)

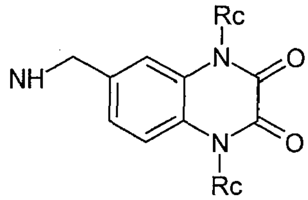

(VII)

wherein each

Rc

can be the same or different and independently represents hydrogen, $C_1$-$C_{20}$ alkyl or $C_6$-$C_{10}$-aryl, ($C_2$-$C_4$) alkenylen ($C_6$-$C_{10}$) aryl, $C_1$-$C_4$-alkylen-$C_6$-$C_{10}$-aryl, the aryl radicals optionally being substituted by hydroxyl, $C_1$-$C_4$-alkyl, $C_1$-$C_4$ alkoxyl, $C_6$-$C_{10}$ aryloxy, Cl, cyano, $C_6$-$C_{10}$-aryl, or CO-$C_6$-$C_{10}$-aryl;

Rd

represents hydrogen, $C_{1-30}$ alkyl, $C_6$-$C_{10}$-aryl or halogen;

Re

represents hydrogen, $C_{1-30}$ alkyl, $C_6$-$C_{10}$-aryl or a halogen and can be on ortho (o) or meta (m) position to Rd;

X

can be O or N-Rf where Rf represents hydrogen, $C_1$-$C_{20}$ alkyl or phenyl;

Y

can be O or S;

n

is a number from 1 to 30;

(c) a transition metal catalyst.

## Description

The present invention relates to oxygen barrier plastic materials comprising an organic polymer and a low molecular weight oxygen active barrier to enhance the quality and shelf-life of oxygen-sensitive products in packaging applications. It also relates to oxygen barrier plastic materials that can be processed into mono- and multilayer rigid containers or flexible films to impart oxygen barrier properties at an enhanced clarity compared to other oxygen barrier compositions known in the art. Furthermore, the present invention relates to the use of oxygen barrier compositions in food, beverage and pharmaceutical packaging and to plastic material and articles comprising said oxygen barrier compositions.

For the purposes of the invention, masterbatches (MB) are compositions comprising a polymeric carrier or a liquid vehicle and an additive, where the additive is present in the masterbatch in higher concentrations than in the final application or in the final article, and the carrier does not have to be the organic polymer of the final application or of the final article. Preferred concentrations of the additives in a masterbatch range preferably of from 0.5 to 90 % by weight, more preferably of from 1 to 80 % by weight, the % by weight based in each case on the total weight of the masterbatch.

For the purposes of the invention, compounds (CO) are compositions comprising an organic polymer and an additive, where the additive is present in the compound in the desired concentration for the final application or for the final article, and the organic polymer is the organic polymer of the final application or of the final article, so that the compound is merely brought to the desired shape of the final application or of the final article by means of a physical shaping process.

Packaging for food and beverage, personal care, medical, pharmaceutical, household and industrial products, require high barrier properties to oxygen to preserve the freshness and quality of the package contents. Containers made of traditional materials like glass or metal provide an excellent barrier both to egress of substances from the container and to ingress of substances from the environment. In most instances, gas permeation through a glass or metal container is negligible. Nevertheless, due to the potentially lower cost and functional advantages (such as thermo-sealability, microwavability, optical properties, lightweight, decreased breakage and unlimited sizes and shapes) over materials such as glass and metal, there has been an increasing use of plastic materials in packaging in recent years. Polymeric material commonly used in packaging applications are polyolefins (i.e. LDPE, LLDPE, PP) and polyethylene terephthalate resin (PET). Both polyolefins (from now on POs) and PET have a number of advantageous properties for use in packaging applications, but they do not possess the gas barrier properties that are required or desired in many oxygen sensitive applications. In fact there are polymers that are, for example, good oxygen barriers but poor water-vapour barriers and vice-versa. Barrier polymers often rely on dipole-dipole interactions to reduce chain mobility, and hence diffusional movements to permeants. Polymers without dipole-dipole interactions like POs for instance dissolve very little water but have great affinity and are very permeable to apolar molecules like $O_2$ and $CO_2$. PET on the other hand is less porous and interacts poorly with oxygen although water molecules easily hydrogen-bond and permeate through the matrix.

A number of solutions to overcome barrier problems associated with plastic containers have been proposed.

The packaging industry has developed, for example, multilayer structures comprising mixed polymer layers. These laminated packaging containers offer improved barrier properties approaching, but not comparable to those of glass and steel and also while sacrificing many of the recycling benefits associated with single layer containers. Furthermore, depending on the mixtures of polymers, copolymers and blends used in the various layers, clarity of the container is often substantially diminished. Maintaining the proper balance of recyclability, barrier properties, and clarity is most critical in many rigid and flexible packaging applications.

The use of multilayer films or bottles that contain an inner, sometimes sandwiched, layer of a higher barrier polymer material compared to the outer polymer layers is commonplace. Typically the centre layer is a high barrier polymer that slows the permeability of oxygen through the container wall. Such a system would be categorized as a passive barrier. Examples of most common high barrier polymers include ethylene-vinyl alcohol (EVOH) and polyamides. A common construction for such multilayer structures would comprise inner and outer layers of POs with a centre layer of ethylene-vinyl alcohol (EVOH) or polymer inner and outer layers of PET with a centre layer of a polyamide.

One of the advantages of using polymers such as EVOH, instead of other materials imparting oxygen barrier properties such as thin metal foil or vapour-deposited layers of inorganic oxides, is that polymer processing techniques such as extrusion, injection molding, film blowing, are available with no need of any post-production treatment. However, EVOH suffers from the drawback of being water sensitive and to maintain its oxygen barrier properties it is usually necessary to coat or laminate it with moisture-barrier materials such as polyolefins. Also, generally speaking, the use of an EVOH passive barrier layer with certain thickness contributes to increasing the costs associated with the production of certain articles as well as deeply compromising the recyclability of the material. It is therefore highly desirable the employment of a solution that can reduce, if not eliminate, the amount of EVOH that is used for this purpose.

Designing multilayer structures of the type described above also implies increased complexity of the manufacturing process. In particular, the individual layers of said multilayer structures have to be assembled in such a manner

that problems like separation of the individual layers (delamination) during use of the article are prevented.

To further reduce the entry of oxygen into the contents of the package, small amounts of transition metal salts can be added to POs blends to catalyse and actively promote the oxidation of an additive, thereby further enhancing the oxygen barrier characteristics of the package. This method of providing oxygen barrier properties where a substance consumes or reacts chemically or biologically with the oxygen is known as an active oxygen barrier and differs from the passive oxygen barriers which attempt to physically slow down the permeation of oxygen across the packaging walls.

Currently viable solutions comprise the use of systems that are rather complex. These often require water to be present in order for the oxygen barrier to be activated. Humidity has to come e.g. from the product contained in the package (very often the food itself) and thus excluding, for example, dry food from the spectrum of applications those technologies, can be applied to. In other cases, UV-Vis irradiation is necessary in order to activate the active barrier action of the components, thus requiring the use of additional processing steps.

US 8609744 discloses an oxygen scavenging mixture comprising an oxidisable metal component and, among others, an electrolyte component to be mixed with LDPE.

EP2112201 discloses a composition comprising a polyolefin, a metal based oxygen scavenger, a clay or nucleating agent, and a polyamide nylon based masterbatch containing EVOH, a nanoclay and a compatibilizer.

Beyond pure performance and protection of the packaged product, appearance is also a key element to product differentiation. The trend towards transparent materials has become critical to the food packaging industry in recent years and continues to gain momentum. In those applications requiring clarity, and particularly for POs applications, the packaging article should have optical properties approaching those of the virgin polymer. Product visibility is a powerful tool, both functionally and aesthetically. It allows end consumers to readily see what product they are buying and check its appearance without opening the packaging and enables product manufacturers to easily inspect the packaged product through the use of vision systems, metal detectors and manual visual inspection.

As mentioned, in barrier layers of packaging articles that are made from blends of oxygen barrier materials with resins such as POs, haze can result from I) the immiscibility of the barrier materials with the base polymer, II) the inability to create disperse-phase domains that are small enough as not to interfere with the passage of light and III) the adverse influence of the barrier material on the crystallization behaviour of POs. One approach to minimize such haze is the careful selection of base resin to improve dispersability of the barrier material and, thus, reduce, but not substantially eliminate, haze; and to minimize the adverse crystallization effect. This approach may restrict the choice of base polymer resin. Another approach is to use compositions that serve as compatibilizers to reduce haze. These approaches add cost to the barrier layer and the compatibilizer adds an additional material that must be evaluated for its suitability for contact with food. Thus, there is a need for improved plastic materials, which provide high oxygen barrier capability and are substantially transparent.

The possibility of including the active oxygen barrier additive directly into the polymer matrix of the final article represents a clear advantage when compared to inventions where, for example, the barrier material is separated from the food by keeping it in a small, highly oxygen permeable sachet. The disadvantage of such system includes the need for additional packaging steps as well as risks in case of potential contamination where the sachet should break or a consumer should accidentally ingest it.

Finally, the preferred thin walled container should be suitable for recycling with other polyolefin articles. In order to be meaningful, the recycling must be conducted without the need for any special physical processing such as delamination or the need for any special chemical processing such as depolymerization.

Summarising, a number of attempts have been made to prepare oxygen barrier and/or scavenging articles. There have been numerous approaches involving the use of laminated structures, and others involving the incorporation of inorganic powders, salts and/or sacrificial oxidizable compounds. Most of these systems have at least one or several disadvantages including poor processing properties, insufficient oxygen uptake, moisture or UV-Vis activation requirements and most of them also suffer from poor clarity and lack of recyclability.

A need exists for improved oxygen barrier compositions, methods for the production of said compositions and methods of using the compositions in packaging articles that satisfy all the demands as recited above, specifically the need for transparent, recyclable, thin walled articles and containers with excellent barrier capabilities, which do not depend on the presence of water for activation.

In particular, it would be desirable to obtain improved gas barrier POs compositions that can be blown or cast as film or sheet or extrusion blow molded as monolayer containers with reduced haze and without any further activation mean required. This is particularly required for containers that need a long(er) shelf life, such as fresh and processed meat and other oxygen sensitive materials.

Within the scope of the present invention, preferred compositions would comprise an active oxygen barrier that absorbs oxygen at a rate faster than the permeability of oxygen through the packaging wall for the planned shelf life of the packaged product. Additionally, shelf life requirements for certain products impose that the oxygen barrier activity should be maintained for extended periods of time.

Surprisingly, it has been found that the object of the invention can be achieved by using particular additives as

oxygen barriers in certain plastic materials and even more surprisingly also without the need for a transition metal catalyst as specified hereinafter.

Therefore, the present invention provides for the use of an additive as oxygen barrier in a plastic material wherein

a) the plastic material is a polyolefin, a polyolefin copolymer or a polystyrene, and the additive is (b) and optionally (c):

b) a compound of formula (I);

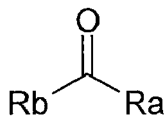

**(I)**

wherein

Ra represents $C_7$-$C_{20}$ alkyl, $C_6$-$C_{10}$ aryl, $C_4$-$C_{10}$ heteroaryl, wherein the heteroatoms are N, O and/or S, ($C_2$-$C_6$)-alkenylen-($C_6$-$C_{10}$) aryl, $C_1$-$C_6$-alkylen-$C_6$-$C_{10}$-aryl, e.g. benzyl, the aryl and heteroaryl radicals optionally being substituted by:
hydroxyl, $C_1$-$C_6$-alkyl, $C_1$-$C_6$ alkoxyl, $C_6$-$C_{10}$ aryloxy, halogen, e.g. F, Cl, Br, I, cyano, nitro, $C_6$-$C_{10}$-aryl, di($C_1$-$C_6$)alkylamino, ($C_1$-$C_6$)alkylthio, $C_6$-$C_{10}$-arylthio, =O, =S, $SO_3H$, $SO_2NR^1R^2$, $CO_2R^3$, $CONR^1R^2$, $NHCOR^4$, CO-$C_6$-$C_{10}$-aryl or a combination thereof, wherein $R^1$, $R^2$, $R^3$, $R^4$ are the same or different and independently represent hydrogen or $C_1$-$C_6$-alkyl;

Rb represents a group selected from the moieties of formula (II), (III), (IV), (V), (VI) and (VII);

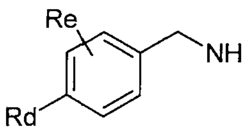

**(II)**

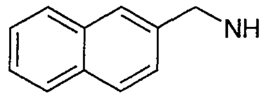

**(III)**

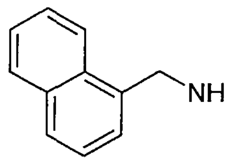

**(IV)**

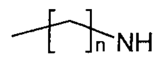

**(V)**

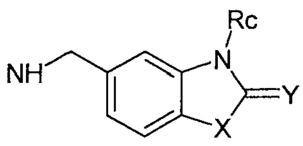

**(VI)**

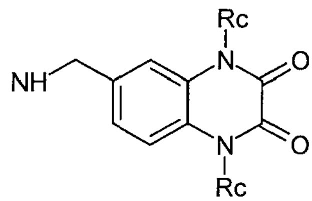

**(VII)**

wherein each

Rc can be the same or different and independently represents hydrogen, $C_1$-$C_{20}$ alkyl or $C_6$-$C_{10}$-aryl, ($C_2$-$C_4$) alkenylen ($C_6$-$C_{10}$) aryl, $C_1$-$C_4$-alkylen-$C_6$-$C_{10}$-aryl, the aryl radicals optionally being substituted by hydroxyl, $C_1$-$C_4$-alkyl, $C_1$-$C_4$ alkoxyl, $C_6$-$C_{10}$ aryloxy, Cl,cyano, $C_6$-$C_{10}$-aryl, or CO-$C_6$-$C_{10}$-aryl;

Rd represents hydrogen, $C_{1-30}$ alkyl, $C_6$-$C_{10}$-aryl or halogen;

Re represents hydrogen, $C_{1-30}$ alkyl, $C_6$-$C_{10}$ aryl or a halogen and can be on ortho (o) or meta (m) position to Rd;

X can be O or N-Rf where Rf represents hydrogen, $C_1$-$C_{20}$ alkyl or phenyl;

Y can be O or S;

n is a number from 1 to 30;

(c) a transition metal catalyst.

Expediently, the plastic material (a) is or is part of a packaging article, or is part of a masterbatch MB or part of a Compound CO which can be processed into a packaging material.

Oxygen barrier, in the sense of the present invention, refers to the reduction or elimination of oxygen permeation

inside the packaging cavity by providing a substance that reacts with, absorbs and/or consumes oxygen. This is known as an active oxygen barrier and differs from the passive oxygen barriers, which attempt to hermetically seal a product away from oxygen.

The present invention further offers a method for providing an active oxygen barrier in a plastic material of a packaging article incorporating an effective amount of an additive (b) and optionally (c) as specified above into a plastic material which is a polyolefin, a polyolefin copolymer or a polystyrene.

Preferably, the additive (b) is used in an amount of from 0.05 to 5 %, more preferably 0.1 to 1.5 %, most preferably 0.1 to 1 %, by weight, based on the total weight of the plastic material and the additive(s).

Preferably, the transition metal catalyst (c) is used in an amount of from 0 to 1 %, preferably 0.001 to 1%, more preferably 0.01 to 0.5%, by weight, based on the total weight of the plastic material and the additive(s).

The present invention further provides for a composition Z comprising the components A, B, and optionally C, the component A being a plastic material selected from the group consisting of polyolefins, polyolefin copolymers and polystyrenes; the component B being an additive selected from the compounds represented by the formula (I);

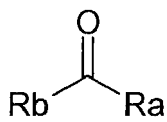

**(I)**

wherein

Ra represents $C_7$-$C_{20}$ alkyl, $C_6$-$C_{10}$ aryl, $C_4$-$C_{10}$ heteroaryl, wherein the heteroatoms are N, O and/or S, ($C_2$-$C_6$)-alkenylen-($C_6$-$C_{10}$) aryl, $C_1$-$C_6$-alkylen-$C_6$-$C_{10}$-aryl, e.g. benzyl, the aryl and heteroaryl radicals optionally being substituted by:
hydroxyl, $C_1$-$C_6$-alkyl, $C_1$-$C_6$ alkoxyl, $C_6$-$C_{10}$ aryloxy, halogen, e.g. F, Cl,Br, I, cyano, nitro, $C_6$-$C_{10}$-aryl, di($C_1$-$C_6$)alkylamino, ($C_1$-$C_6$)alkylthio, $C_6$-$C_{10}$-arylthio, =O, =S, $SO_3H$, $SO_2NR^1R^2$, $CO_2R^3$, $CONR^1R^2$, $NHCOR^4$, CO-$C_6$-$C_{10}$-aryl or a combination thereof, wherein $R^1$, $R^2$, $R^3$, $R^4$ are the same or different and independently represent hydrogen or $C_1$-$C_6$-alkyl;

Rb represents a group selected from the moieties of formula (II), (III), (IV), (V), (VI) and (VII);

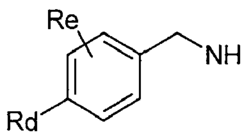 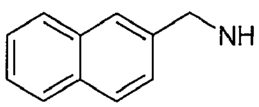 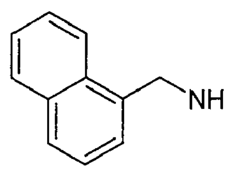 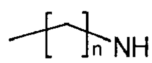

**(II)** **(III)** **(IV)** **(V)**

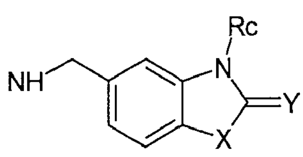 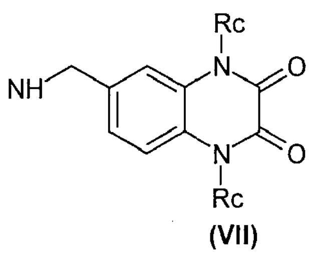

**(VI)** **(VII)**

wherein each

Rc can be the same or different and independently represents hydrogen, $C_1$-$C_{20}$ alkyl or $C_6$-$C_{10}$-aryl, ($C_2$-$C_4$) alkenylen ($C_6$-$C_{10}$) aryl, $C_1$-$C_4$-alkylen-$C_6$-$C_{10}$-aryl, the aryl radicals optionally being substituted by hydroxyl, $C_1$-$C_4$-alkyl, $C_1$-$C_4$ alkoxyl, $C_6$-$C_{10}$ aryloxy, Cl, cyano, $C_6$-$C_{10}$-aryl, or CO-$C_6$-$C_{10}$-aryl;

Rd represents hydrogen, $C_{1-30}$ alkyl, $C_6$-$C_{10}$-aryl or halogen;

Re represents hydrogen, $C_{1-30}$ alkyl, $C_6$-$C_{10}$-aryl or a halogen and can be on ortho (o) or meta (m) position to Rd;

X can be O or N-Rf where Rf represents hydrogen, $C_1$-$C_{20}$ alkyl or phenyl;

Y can be O or S;

n is a number from 1 to 30; the component C being a transition metal catalyst.

Preferred polyolefins and polyolefin copolymers, i.e. component A or plastic material (a) within the meaning of the invention, are thermoplastic polyolefins known in the art and are selected from the group consisting of

- polyethylene (PE), preferably selected from the group consisting of high density polyethylene (HDPE), medium density polyethylene (MDPE), low density polyethylene (LDPE), linear low density polyethylene (LLDPE), metallocene low density polyethylene (mLDPE) and metallocene linear low density polyethylene (mLLDPE),
- polypropylene (PP), preferably selected from the group consisting of polypropylene homopolymer (PPH), polypropylene random copolymer (PP-R) and polypropylene block copolymers (PP-block-COPO),
- PE copolymers, preferably selected from the group consisting of ethylene-vinyl acetate copolymers (EVA), copolymers of ethylene and methyl acrylate (EMA), copolymers of ethylene and butyl acrylate (EBA), copolymers of ethylene and ethyl acrylate (EEA), and cycloolefin copolymers (COC),
- general purpose polystyrene (GPPS) and high impact polystyrene (HIPS); more preferably of
- high density polyethylene (HDPE) and low density polyethylene (LDPE)
- polypropylene homopolymer (PPH),
- general purpose polystyrene (GPPS).

Preferred polystyrenes, i.e. component A or plastic material a) within the meaning of the invention, can be a styrene homopolymer, an alkylstyrene homopolymer, preferably a $C_1$-$C_4$-alkylstyrene homopolymer, for example $\alpha$-methylstyrene homopolymer; a styrene copolymer, especially a high impact polystyrene (HIPS). High impact polystyrenes (HIPS) are generally prepared by polymerization by grafting mixtures of styrene and optionally of one or more copolymerizable vinyl monomers, preferably mixtures of styrene, methylstyrene, ethylstyrene, butylstyrene, halostyrenes, vinylalkylbenzenes, such as vinyltoluene, vinylxylene, acrylonitrile, methacrylonitrile, lower alkyl esters of methacrylic acid, in the presence of a rubbery polymer trunk comprising copolymers chosen from polybutadiene, polyisoprene, rubbery styrene-diene copolymers, acrylic rubber, nitrile rubber and olefinic rubbers, such as propylene diene monomer rubber (PDM) and propylene rubber (PR). In the high impact polystyrene, the rubbery polymer trunk normally constitutes from 5 to 80 % by weight, preferably 5 to 50 % by weight, of the total weight of the grafted polymer.

The preferred density of component A is of from 1.0 to 1.1 g/cm$^3$, more preferably of from 1.02 to 1.06 g/cm$^3$, even more preferably of from 1.03 to 1.05 g/cm$^3$.

Preferred polystyrenes are polystyrenes with a MFR at 200 °C/5 kg according to ISO 1133 of from 0.1 to 300 g/10 min, more preferably of from 1 to 200 g/10 min, even more preferably of from 5 to 100 g/10 min, especially of from 10 to 50 g/10 min, more especially of from 15 to 35 g/10 min, in particular of from 20 to 25 g/10 min.

Preferred embodiments of formula (I) are compounds of formula (VIII), (IX) and (X)

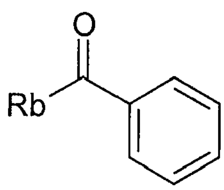

**(VIII)**

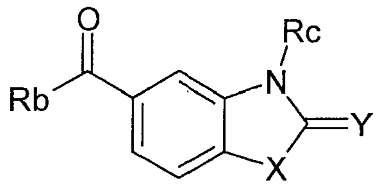

**(IX)**

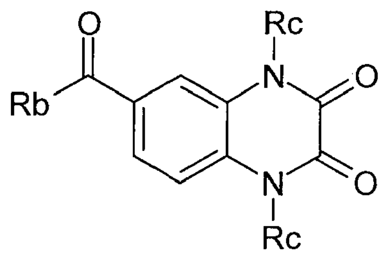

**(X)**

wherein

Rb, Rc, Y and X are as specified above.

In a more preferred embodiment of the present invention, the additive b) or component B is a compound of formula (XI)

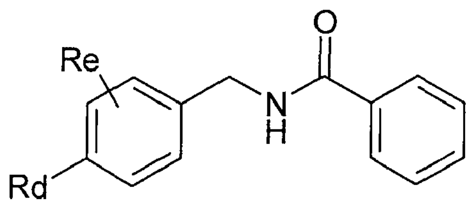

**(XI)**

wherein

Rd represents hydrogen or $C_{1-30}$ alkyl, a $C_6$-$C_{10}$- aryl or a halogen;
Re represents hydrogen or $C_{1-30}$ alkyl, a $C_6$-$C_{10}$ aryl or a halogen and can be on ortho (o) or meta (m) position to Rd.

A particularly preferred additive (b) or component B is a compound represented by the above formula (XI), wherein both Rd and Re are hydrogen, i.e. N-benzylbenzamide (formula (XII)).

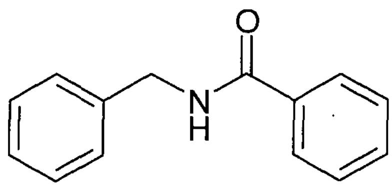

**(XII)**

Additive (c) or component C, within the meaning of the invention, is a transition metal catalyst that initiates and accelerates the rate of oxygen consumption. The mechanism by which this transition metal functions is not certain. The catalyst may or may not be consumed with oxygen, or if consumed, may only be consumed temporarily by converting back to a catalytically active state.

More preferably, the transition metal catalyst is in the form of a salt, with the transition metal selected from the first, second or third transition series of the Periodic Table of the Elements. Suitable metals and their oxidation states include, but are not limited to, manganese II or III, iron II or III, cobalt II or III, nickel II or III, copper I or II, rhodium II, III or IV, and ruthenium. The oxidation state of the metal when introduced does not need necessarily to be that of the active form. The metal is preferably iron, nickel, manganese, cobalt or copper; more preferably manganese or cobalt; and even more preferably cobalt. Suitable counterions for the metal include, but are not limited to, chloride, acetate, acetylacetonate, propionate, oleate, stearate, palmitate, 2-ethylhexanoate, octanoate, neodecanoate or naphthenate.

The metal salt can also be an ionomer, in which case a polymeric counterion is employed. Such ionomers are well known in the art.

Even more preferably, the salt, the transition metal, and the counterion are either compliant with country regulations in the matter of food contact materials or, if part of a packaging article, exhibit substantially no migration from the oxygen barrier composition to the packaged contents. Particularly preferable salts include cobalt oleate, cobalt propionate, cobalt stearate, and cobalt neodecanoate.

Optionally, composition Z comprises also one or more further substances (component D) selected from the group consisting of colorants, fillers, acid scavengers, processing aids, coupling agents, lubricants, blowing agents, polyhydric alcohols, nucleating agents, antioxidants, antistatic agents, UV absorbers, slip agents, anti-fogging agents, anti-condensation agents, suspension stabilizers, anti-blocking agents, waxes, and a mixture of these substances.

Preferably, component D is selected from the group consisting of natural colorants derived from plants or animals and synthetic colorants, preferred synthetic colorants being synthetic organic and inorganic dyes and pigments,

- preferred synthetic organic pigments being azo or disazo pigments, laked azo or disazo pigments or polycyclic pigments, particularly preferably phthalocyanine, diketopyrrolopyrrole, quinacridone, perylene, dioxazine, anthraquinone, thioindigo, diaryl or quinophthalone pigments;
- preferred synthetic inorganic pigments being metal oxides, mixed oxides, aluminium sulphates, chromates, metal powders, pearlescent pigments (mica), luminescent colours, titanium oxides, cadmium lead pigments, iron oxides,

carbon black, silicates, nickel titanates, cobalt pigments or chromium oxides;
- fillers and nanosized fillers, preferably silica, zeolites, silicates, particularly preferably aluminium silicates, sodium silicate, calcium silicates; chalk or talc; metal hydrates;
- auxiliaries, preferably acid scavengers, processing aids, coupling agents, lubricants, stearates, blowing agents, polyhydric alcohols, nucleating agents, or antioxidants, e.g. stearates, or oxides such as magnesium oxide;
- antioxidants, preferably primary or secondary antioxidants;
- antistatic agents;

UV absorbers, slip agents, anti-fogging agents, anti-condensation agents, suspension stabilizers, anti-blocking agents, waxes, and a mixture of these substances.

More preferably, component D is selected from the group consisting of UV absorbers, antioxidants and colorants.

Preferably, the composition Z contains

| | |
|---|---|
| of from 14 to 99.99 | % by weight of component A; |
| of from 0.01 to 70 | % by weight of component B; |
| of from 0 to 15 | % by weight of component C; |
| of from 0 to 80 | % by weight of component D; |

with the % by weight being based in each case on the total weight of the composition Z; and with the weight percent of the components A, B, optionally C and optionally D always adding up to 100 %.

The composition Z can be a masterbatch MB or a compound CO. The composition Z can be liquid or solid at ambient temperature.

Preferably, in case the composition Z is a masterbatch MB, the composition Z comprises

| | |
|---|---|
| of from 14 to 95 | % by weight of component A; |
| of from 5 to 70 | % by weight of component B; |
| of from 0 to 15 | % by weight of component C; |
| of from 0 to 80 | % by weight of component D ; |

more preferably

| | |
|---|---|
| of from 39 to 94 | % by weight of component A; |
| of from 5 to 50 | % by weight of component B; |
| of from 1 to 10 | % by weight of component C; |
| of from 0 to 80 | % by weight of component D ; |

with the % by weight being based in each case on the total weight of the composition Z; and with the weight percent of the components A, B, optionally C and optionally D always adding up to 100 %.

Preferably, in case the composition Z is a compound CO, the composition Z comprises

| | |
|---|---|
| of from 88 to 99.9 | % by weight of component A; |
| of from 0.1 to 1.5 | % by weight of component B; |
| of from 0 to 0.5 | % by weight of component C; |
| of from 0 to 10 | % by weight of component D ; |

more preferably

| | |
|---|---|
| of from 89.8 to 99.79 | % by weight of component A; |
| of from 0.2 to 1.0 | % by weight of component B; |
| of from 0.01 to 0.3 | % by weight of component C; |
| of from 0 to 8.9 | % by weight of f component D ; |

with the % by weight being based in each case on the total weight of the composition Z; and with the weight percent of the components A, B, optionally C and optionally D always adding up to 100 %.

The present invention further provides for a composition Z consisting of components A, B, optionally C, and optionally D, with the components A to D and the amounts and preferred amounts of components A to D as described in the foregoing.

The composition Z of the present invention is expediently formed, e.g. blow molded, into a plastic article.

Therefore, another subject of the present invention is a formed plastic article comprising said composition Z.

The formed plastic article according to the invention can be a packaging material, preferably a container, a film or a sheet, especially for use in packaging of personal care, cosmetics, medical, pharmaceutical, household, industrial, food and beverage products where a high oxygen barrier is needed.

Packaging materials suitable for comprising oxygen barrier composition Z can be flexible, rigid, semi-rigid or combinations thereof.

Rigid packaging articles typically have wall thicknesses in the range of 100 to 1000 micrometers. Typical flexible packages typically have thicknesses of 5 to 250 micrometers.

Rigid packaging articles or flexible films comprising active oxygen barrier compositions of the invention can consist of a single layer or may comprise multiple layers.

When a packaging article or film comprises an active oxygen barrier layer, it can further comprise one or more additional layers, one or more of the additional layers comprising a passive oxygen barrier layer or being permeable to oxygen. Further additional layers, such as adhesive layers, can also be used in a multi-layer packaging article or film.

Preferably, the rigid containers, e.g. bottles, or flexible films in which composition Z is used are monolayer.

Another subject of the invention is a method for the manufacture of a plastic material or an article as defined above, characterised in that the components A, B, optionally C and optionally D, are physically mixed with one another and subjected to a shape forming process.

For physical mixing, it is possible to use a mixing apparatus customary in the plastics industry. Preferably, the mixing apparatus can be one used to make a liquid masterbatch or a solid masterbatch or can be a combination of those apparatuses. A mixing apparatus for a liquid masterbatch can be a high speed dispersor (e.g. of CowlesTM type), a media mill, a three-roll mill, a submill or a rotor-stator type dispersor.

A mixing apparatus used to make solid masterbatches MB or compounds CO can be a mixer, extruder, kneader, press, mill, calender, blender, injection moulding machine, injection and stretch blow moulding machine (ISBM), extrusion blow moulding machine (EBM), compression moulding machine, compression and stretch blow moulding machine; more preferably a mixer, extruder, injection moulding machine, injection and stretch blow moulding machine, compression moulding machine, compression and stretch blow moulding machine; even more preferably a mixer, extruder, injection and stretch blow moulding machine and extrusion blow moulding machine.

The shape forming process for the article is dependent on the desired shape of article to be manufactured.

Containers are preferably made by blow moulding, injection moulding, injection and stretch blow moulding, extrusion blow moulding, compression moulding, compression and stretch blow moulding processes.

Films and sheets are preferably made by cast or blown film extrusion or co-extrusion processes, depending on the thickness required and on the number of layers needed to obtain specific properties, eventually followed by post-extrusion shaping processes like thermoforming or stretching. In the thermoforming process, the plastic sheet is heated to a pliable forming temperature, formed to a specific shape in a mold, and trimmed to create a final article. If vacuum is used, this process is generally called vacuum forming. In post-extrusion stretching processes an extruded film can be, for example, biaxially oriented by drawing. All the above listed processes are well-known in the art.

For compositions Z comprising more than one masterbatch or components, extruders may be equipped with a metering system for introducing said components and/or masterbatches into the main stream polymer. This metering may be carried out directly with one or more pure components or with one or more masterbatches.

The type of metering equipment used depends on the form in which the pure component or the masterbatch is metered.

In the case of solid component, a metering device of the feed screw type is usually employed and the point of introduction may be the main inlet of the extruder jointly with the feed of the main polymer granules, or in an unpressurized injection zone located along the extruder. For a solid masterbatch, the metering device may be a system comprising an additional extruder that pre-melts the masterbatch, pressurizes it and meters it by means of a metering pump, the amount of masterbatch metered being fed at a point along the main extruder advantageously without pressure.

For a liquid pure component or a liquid masterbatch, the metering device may be a system comprising one or more metering pumps which introduce the liquid masterbatch at the main inlet of the extruder jointly with the feed with the main polymer granules, without any pressure, or at a point under pressure located along the extruder.

The mixing of the components forming composition Z can occur in one step, two steps or in a plurality of steps.

Mixing can occur in one step when the components A, B, optionally C and optionally components D, are directly metered and/or let down in a form of liquid or solid concentrates or as pure components, for example in an injection and stretch blow molding machine.

The mixing can also occur in two or three steps, wherein in a first step components B and optionally C are

predispersed into component A, and in one or more consecutive steps are added to component A and optionally component D.

Preferably, component B and optionally component C are predispersed into component A to form two separate masterbatches, and then these masterbatches are combined with components A and optionally D.

In one preferred embodiment of the invention, in a first step, component B and optionally component C are dispersed into component A to provide two separate masterbatches. After being melt compounded, for example in a single or twin screw extruder, the extrudates are withdrawn in strand form, and recovered as pellets according to the usual way, such as cutting. In a second step, the obtained masterbatches are metered and let down by a converter/compounder into the main stream of component A pellets and optionally component D pellets, one or both optionally ground, or into the main stream of a concentrate of compound D into compound A, for example in an injection and stretch blow molding machine.

In another embodiment of the invention, in a first step, component B, optionally C and optionally components D are dispersed into component A to provide a masterbatch. After being melt compounded, for example in a single or twin screw extruder, the extrudate is withdrawn in strand form, and recovered as pellets according to the usual way such as cutting. In a second step, the obtained solid masterbatch is metered and let down by a converter/compounder into the main stream of component A of e.g. an injection and stretch blow molding machine, at a rate corresponding to the final desired concentration of component B, C and D in the article and without the step of separately metering component D.

Mixing preferably occurs continuously or batchwise, more preferably continuously; in case of a solid masterbatch MB preferably by extrusion, mixing, milling or calendering, more preferably by extrusion; in case of a liquid masterbatch MB preferably by mixing or milling; in case of a compound CO preferably by extrusion or calendaring, more preferably by extrusion.

Mixing is preferably carried out at a temperature of from 0 to 330 °C.

The mixing time is preferably of from 5 sec to 36 h, preferably 5 sec to 24 h.

The mixing time in the case of continuous mixing is preferably of from 5 sec to 1 h. The mixing time in the case of batchwise mixing is preferably of from 1 sec to 36 h.

In the case of a liquid masterbatch MB, mixing is preferably carried at a temperature of from 0 to 150 °C with a mixing time of from 0.5 minutes to 60 minutes.

In the case of a solid masterbatch MB or a compound CO, mixing is preferably carried out at a temperature of from 80 to 330 °C with a mixing time of from 5 sec to 1 h.

In another embodiment, the compositions described herein are used as a component of a wall that is used in a package article for oxygen sensitive materials. The wall may be a rigid one, such as in a container or bottle or a flexible one such as in films. It may be homogenous or a laminated or coated with other polymers. If it is laminated or coated, then the barrier property may reside in one or more layers of the wall.

Specific articles of the present invention include containers, films and sheets for packaging of food, beverages, cosmetics, pharmaceuticals, and personal care products where a high oxygen barrier is needed. Examples of beverage containers are: bottles for juices, sport drinks, or any other beverage where oxygen detrimentally affects the flavour, fragrance, performance (prevent vitamin degradation), or colour of the drink. The compositions of the present invention are also particularly useful as a sheet for thermoforming into rigid packages and films for flexible structures. Rigid packages include food trays and lids. Examples of food tray applications include dual ovenable food trays, or cold storage food trays, both in the base container and in the lidding (whether a thermoformed lid or a film), where the freshness of the food contents can decay with the ingress of oxygen. The compositions of the present invention also find use in the manufacture of cosmetic containers and containers for pharmaceuticals or medical devices.

Preferred articles of the present invention are rigid packaging articles, such as bottles and thermoformed sheets and flexible films.

More preferred articles of the present invention are hollow containers which are expediently manufactured by any kind of blow moulding process known in the art. Blow molding of thermoplastic hollow containers is conventionally performed either by blow molding of an extruded thermoplastic polymeric parison (extrusion blow moulding - EBM) or by blow molding of a thermoplastic polymeric preform, the latter is usually injection molded from a thermoplastic polymer (injection and stretch blow moulding - ISBM). The hot thermoplastic polymeric parison or the heated preform is received within a mold cavity whereupon pressurized gas provides the blow molding of the container to the shape of the mold cavity.

In actual use, the oxygen barrier performance requirement of the article will largely depend on three parameters of each application:

- the quantity of oxygen initially present in the package,
- the rate of oxygen entry into the package in the absence of the barrier property, and
- the intended shelf life for the package.

Test Methods

The product properties are determined by the following methods, unless indicated otherwise:

Values of density are determined in accordance with ASTM D792 (g/$cm^3$).

Values of melt flow rates (MFR) are determined in accordance with ASTM D1238 (g/10 min at specified temperature and weight)

Measurement method for oxygen barrier performance

In case of films:

A proprietary steel cell with an open surface of 20x20 $cm^2$ is used to simulate the conditions of a typical tray for food stuff. The cell is prepared within a nitrogen circulation glove box, covered by a barrier film and sealed at the edges via a steel frame. Measurement of the oxygen level in the free headspace of the cell is then carried out using a non-invasive oxygen measurement sensor and a Fibox® transmitter. Data are collected at regular time intervals. For each sample, the oxygen ingress at a certain time is calculated as the difference between the oxygen content measured at that time and the level of oxygen measured at time 0. The oxygen ingress is then plotted against time.

Haze measurement:

Values of haze are determined on a 50 μm film in accordance with ASTM D1003, Procedure A (% of transmitted light which, in passing through a specimen, deviates from the incident beam by forward scattering)
$\%Haze = (T_{diffuse} / T_{total}) * 100$
where T = % transmission.
Films were manufactured as described below and the haze of the films was measured with a hazemeter haze-gard dual (BYK Gardner). D65 illuminant was used with a CIE 1964 10° standard observer. The haze is defined as the percent of the CIE Y diffuse transmittance to the CIE Y total transmission.

Examples

% by weight mentioned in the following examples are based on the total weight of the mixture, composition or article; parts are parts by weight;
"ex" means example; "cpex" means comparative example; MB means masterbatch; CO means compound; unless indicated otherwise.

Substances used

Component A1:

Low Density Polyethylene (LDPE) powder: LDPE Riblene®, M.F.I. 2 g/10 min 190 °C 2,16 Kg; density 0.925 g/$cm^3$ (ASTM D3236-88).

Component B1:

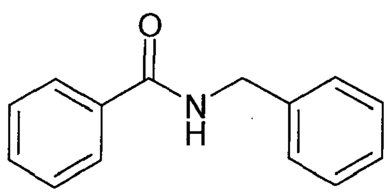.

Component C1:

Cobalt stearate (9.5 % Cobalt concentration).

Component D1:

Anhydrous Sodium Sulfite, CAS. 7757-83-7

Component D2:

Calcitec®, calcium carbonate powder, particle size 99 % < 10 μm.

Masterbatches MB1 to MB3

The components were homogenized together on a Leistritz® ZSE18HP extruder at the temperature of 140 °C to obtain solid masterbatches MB1 to MB3; Table 1 gives the details.

Table 1

| Masterbatches | Components used [parts] | | | | |
|---|---|---|---|---|---|
| | A1 | B1 | C1 | D1 | D2 |
| MB1 | 90 | 10 | | | |
| MB2 | 95 | | 5 | | |
| MB3 | 45 | | | 50 | 5 |

ex1, ex2 and cpex1 to cpex2:

Component A1 and the other components were mixed and homogenized in the ratios according to Table 2. The obtained Compounds CO1 to CO4 were used to manufacture 50 μm monolayer films on a film blowing machine LabTech® Scientific.

As an example of operational mode, components A1, MB1, MB2 or MB3 were inserted through a hopper applied to the main stream of a LabTech® Scientific Blow Extruder (model Lab25; 25mm screw diameter 1:30 ratio) while internal temperature was kept between 190 and 195°C; blown films were then collected from the unit for the necessary testing.

The oxygen barrier performance corresponding to the films prepared with compounds CO1 to CO4 was then measured by following the methods described above. Table 4 gives the details.

CO1 consists of a composition formulated with virgin LDPE resin. CO4 consists of a sodium sulfite based composition not comprising component B1.

Table 2

| ex-cpex | Compounds | Components used [parts] | | | |
|---|---|---|---|---|---|
| | | A1 | MB1 | MB2 | MB3 |
| cpex 1 | CO1 (virgin LDPE) | 100 | | | |
| ex1 | CO2 | 95 | 5 | | |
| ex2 | CO3 | 94 | 5 | 1 | |
| cpex2 | CO4 | 94 | | | 6 |

Total haze is the preferred method of measuring the clarity of POs articles, which can determine their suitability for packaging applications requiring high levels of transparency. Haze was measured on PO films obtained from compounds CO1 to CO4 as described above. Table 3 gives the details.

Composition CO2 and CO3 of the present invention clearly show a significant improvement in clarity compared to the state-of-the-art composition CO4 not comprising component B. The level of clarity of the inventive compositions is very similar to virgin LDPE, as in CO1.

Table 3

| Compounds | Haze (%) |
|---|---|
| CO1 | 1.5 |
| CO2 | 1.9 |
| CO3 | 1.8 |
| CO4 | 8 |

In table 4, the ingress of oxygen (in ppm) measured for compositions CO1 to CO4 is reported against the time elapsed (measured in days) from the moment the cell is hermetically sealed leaving inside an oxygen-free atmosphere. Difference between subsequent measurements is reported as Delta values, and the speed of ingress per day in the same period is reported as m, according to the formula

$$\text{Delta} = m \cdot \text{days}$$

For every composition the measurements have been interrupted when one of following conditions were met: end of the interesting period of desired shelf life (196 days), or oxygen content higher than 2.0 ppm (close to the upper accuracy limit of the measurement system).

Table 4

| Time [days] | Compounds | | | | | | | | | | | |
|---|---|---|---|---|---|---|---|---|---|---|---|---|
| | CO1 | | | CO2 | | | CO3 | | | CO4 | | |
| | ppm | Delta | m | ppm | Delta | m | ppm | Delta | m | ppm | Delta | m |
| 0 | 0 | | | 0 | | | 0 | | | 0 | | |
| 28 | 7.30 | 7.3 | 0.26 | 1.72 | 1.72 | 0.061 | 0.68 | 0.68 | 0.02 | 3.36 | 3.36 | 0.12 |
| 35 | 10.20 | 2.9 | 0.41 | 1.68 | -0.04 | -0.06 | 0.67 | -0.01 | -0.001 | 2.90 | -0.46 | -0.07 |
| 49 | | | | 1.69 | 0.01 | 0.0007 | 0.67 | 0 | 0 | 2.59 | -0.31 | -0.02 |
| 86 | | | | 1.54 | -0.15 | -0.004 | 0.63 | -0.04 | -0.001 | 2.41 | -0.18 | -0.005 |
| 118 | | | | 1.77 | 0.23 | 0.007 | 0.71 | 0.08 | 0.002 | | | |
| 196 | | | | 1.94 | 0.17 | 0.002 | 0.83 | 0.12 | 0.0015 | | | |

## Claims

**1.** Use of an additive as oxygen barrier in a plastic material wherein

(a) the plastic material is a polyolefin, a polyolefin copolymer or a polystyrene, and the additive is (b) and optionally (c) wherein:
(b) is a compound of formula (I);

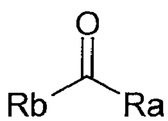

**(I)**

wherein

Ra represents $C_7$-$C_{20}$ alkyl, $C_6$-$C_{10}$ aryl, $C_4$-$C_{10}$ heteroaryl, wherein the heteroatoms are N, O and/or S, ($C_2$-$C_6$)-alkenylen-($C_6$-$C_{10}$) aryl, $C_1$-$C_6$-alkylen-$C_6$-$C_{10}$-aryl, the aryl and heteroaryl radicals optionally being

substituted by:

hydroxyl, $C_1$-$C_6$-alkyl, $C_1$-$C_6$ alkoxyl, $C_6$-$C_{10}$ aryloxy, halogen, cyano, nitro, $C_6$-$C_{10}$-aryl, di($C_1$-$C_6$)alkylamino, ($C_1$-$C_6$)alkylthio, $C_6$-$C_{10}$-arylthio, =O, =S, $SO_3H$, $SO_2NR^1R^2$, $CO_2R^3$, $CONR^1R^2$, $NHCOR^4$, CO-$C_6$-$C_{10}$-aryl or a combination thereof, wherein $R^1$, $R^2$, $R^3$, $R^4$ are the same or different and independently represent hydrogen or $C_1$-$C_6$-alkyl;

Rb represents a group selected from the moieties of formula (II), (III), (IV), (V), (VI) and (VII);

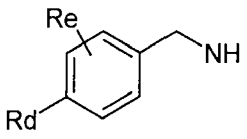
**(II)**

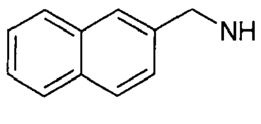
**(III)**

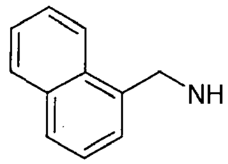
**(IV)**

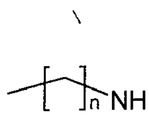
**(V)**

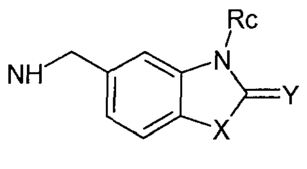
**(VI)**

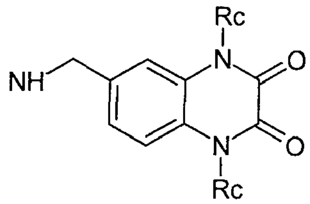
**(VII)**

wherein each

Rc can be the same or different and independently represents hydrogen, $C_1$-$C_{20}$ alkyl or $C_6$-$C_{10}$-aryl, ($C_2$-$C_4$) alkenylen ($C_6$-$C_{10}$) aryl, $C_1$-$C_4$-alkylen-$C_6$-$C_{10}$-aryl, the aryl radicals optionally being substituted by hydroxyl, $C_1$-$C_4$-alkyl, $C_1$-$C_4$ alkoxyl, $C_6$-$C_{10}$ aryloxy, Cl,cyano, $C_6$-$C_{10}$-aryl, or CO-$C_6$-$C_{10}$-aryl;

Rd represents hydrogen, $C_{1-30}$ alkyl, $C_6$-$C_{10}$-aryl or halogen;

Re represents hydrogen, $C_{1-30}$ alkyl, $C_6$-$C_{10}$-aryl or a halogen and can be on ortho (o) or meta (m) position to Rd;

X can be O or N-Rf where Rf represents hydrogen, $C_1$-$C_{20}$ alkyl or phenyl;

Y can be O or S;

n is a number from 1 to 30;

(c) is a transition metal catalyst.

2. The use as claimed in claim 1, wherein the additive (b) is used in an amount of from 0.05 to 5 % by weight, based on the total weight of the plastic material and the additive(s).

3. The use as claimed in claim 1 or 2, wherein the transition metal catalyst c) is used in an amount of from 0 to 1 % by weight, based on the total weight of the plastic material and the additive(s).

4. A composition Z comprising the components A, B, and optionally C, the component A being a plastic material selected from the group consisting of polyolefins, polyolefin copolymers and polystyrenes; the component B being an additive selected from the compounds represented by the formula (I);

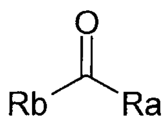
**(I)**

wherein

Ra represents $C_7$-$C_{20}$ alkyl, $C_6$-$C_{10}$ aryl, $C_4$-$C_{10}$ heteroaryl, wherein the heteroatoms are N, O and/or S, ($C_2$-$C_6$)-alkenylen-($C_6$-$C_{10}$) aryl, $C_1$-$C_6$-alkylen-$C_6$-$C_{10}$-aryl, the aryl and heteroaryl radicals optionally being substituted by: hydroxyl, $C_1$-$C_6$-alkyl, $C_1$-$C_6$ alkoxyl, $C_6$-$C_{10}$ aryloxy, halogen, cyano, nitro, $C_6$-$C_{10}$-aryl, di($C_1$-$C_6$)alkylamino, ($C_1$-$C_6$)alkylthio, $C_6$-$C_{10}$-arylthio, =O, =S, $SO_3H$, $SO_2NR^1R^2$, $CO_2R^3$, $CONR^1R^2$, $NHCOR^4$, CO-$C_6$-$C_{10}$-aryl or a combination thereof, wherein $R^1$, $R^2$, $R^3$, $R^4$ are the same or different and independently represent hydrogen or $C_1$-$C_6$-alkyl;

Rb represents a group selected from the moieties of formula (II), (III), (IV), (V), (VI) and (VII);

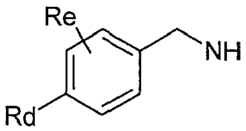
(II)

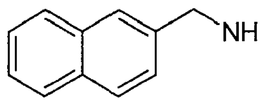
(III)

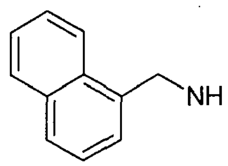
(IV)

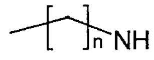
(V)

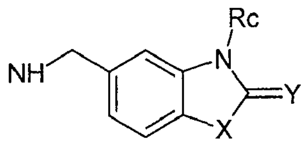
(VI)

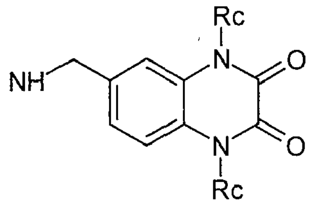
(VII)

wherein each

Rc can be the same or different and independently represents hydrogen, $C_1$-$C_{20}$ alkyl or $C_6$-$C_{10}$-aryl, ($C_2$-$C_4$) alkenylen ($C_6$-$C_{10}$) aryl, $C_1$-$C_4$-alkylen-$C_6$-$C_{10}$-aryl, the aryl radicals optionally being substituted by hydroxyl, $C_1$-$C_4$-alkyl, $C_1$-$C_4$ alkoxyl, $C_6$-$C_{10}$ aryloxy, Cl,cyano, $C_6$-$C_{10}$-aryl, or CO-$C_6$-$C_{10}$-aryl;

Rd represents hydrogen, $C_{1-30}$ alkyl, $C_6$-$C_{10}$-aryl or halogen;

Re represents hydrogen, $C_{1-30}$ alkyl, $C_6$-$C_{10}$-aryl or a halogen and can be on ortho (o) or meta (m) position to Rd;

X can be O or N-Rf where Rf represents hydrogen, $C_1$-$C_{20}$ alkyl or phenyl;

Y can be O or S;

n is a number from 1 to 30;

the component C being a transition metal catalyst.

**5.** The composition as claimed in claim 4, wherein compounds of formula (I) are represented by formula (VIII), (IX) and (X)

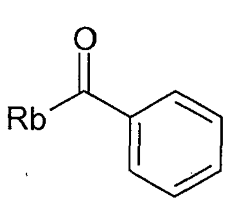
(VIII)

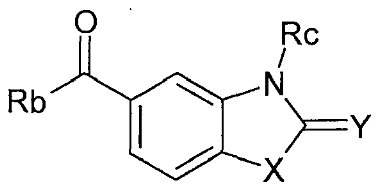
(IX)

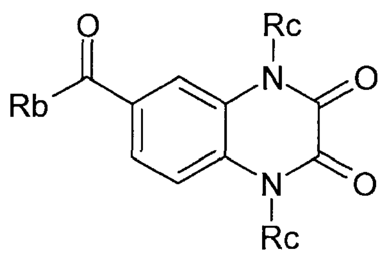
(X)

wherein

Rb, Rc, Y and X are as specified in claim 4.

6. The composition as claimed in claim 4 or 5, wherein component B is a compound of formula (XI)

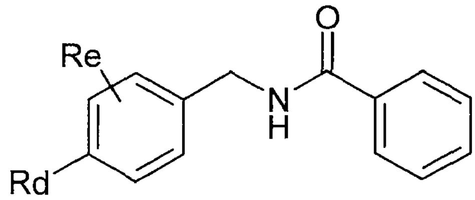

**(XI)**

wherein

Rd represents hydrogen or $C_{1-30}$ alkyl, $C_6$-$C_{10}$- aryl or a halogen;
Re represents hydrogen or $C_{1-30}$ alkyl, $C_6$-$C_{10}$ aryl or a halogen and can be on ortho (o) or meta (m) position to Rd.

7. The composition as claimed in any of claims 4 to 6, wherein the component B is N-benzylbenzamide (formula (XII)).

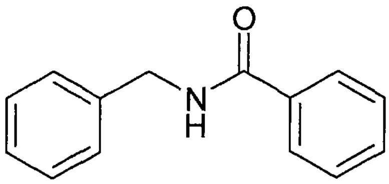

**(XII)**

8. The composition as claimed in any of claims 4 to 7, wherein in component C the metal is iron, nickel, manganese, cobalt or copper, preferably manganese or cobalt, more preferably cobalt.

9. The composition as claimed in any of claims 4 to 8, wherein component C is cobalt oleate, cobalt propionate, cobalt stearate, or cobalt neodecanoate.

10. The composition as claimed in any of claims 4 to 9, further comprising a component D selected from the group consisting of colorants, fillers, acid scavengers, processing aids, coupling agents, lubricants, blowing agents, polyhydric alcohols, nucleating agents, antioxidants, antistatic agents, UV absorbers, slip agents, anti-fogging agents, anti-condensation agents, suspension stabilizers, anti-blocking agents, waxes, and a mixture of these substances.

11. The composition as claimed in any of claims 4 to 10, which contains

| | |
|---|---|
| of from 14 to 99.99 | % by weight of component A; |
| of from 0.01 to 70 | % by weight of component B; |
| of from 0 to 15 | % by weight of component C; |
| of from 0 to 80 | % by weight of component D; |

with the % by weight being based in each case on the total weight of the composition Z; and with the weight percent of the components A, B, optionally C and optionally D always adding up to 100 %.

12. The composition as claimed in any of claims 4 to 11, which composition Z is a masterbatch comprising

| | |
|---|---|
| of from 14 to 95 | % by weight of component A; |
| of from 5 to 70 | % by weight of component B; |
| of from 0 to 15 | % by weight of component C; |

(continued)

| | |
|---|---|
| of from 0 to 80 | % by weight of component D ; |

with the % by weight being based in each case on the total weight of the composition Z; and with the weight percent of the components A, B, optionally C and optionally D always adding up to 100 %.

**13.** The composition as claimed in any of claims 4 to 11, which composition Z is a Compound comprising

| | |
|---|---|
| of from 88 to 99.9 | % by weight of component A; |
| of from 0.1 to 1.5 | % by weight of component B; |
| of from 0 to 0.5 | % by weight of component C; |
| of from 0 to 10 | % by weight of component D ; |

with the % by weight being based in each case on the total weight of the composition Z; and with the weight percent of the components A, B, optionally C and optionally D always adding up to 100 %.

**14.** A method for the manufacture of a composition Z as claimed in any of claims 4 to 13, **characterised in that** the components A, B, optionally C, and optionally D, are physically mixed with one another.

**15.** A formed plastic article comprising the composition Z as claimed in any of claims 4 to 13.

Europäisches Patentamt
European Patent Office
Office européen des brevets

# EUROPEAN SEARCH REPORT

Application Number
EP 14 00 2123

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Y. FUKASAWA ET AL: "Mechanism of Permeability Modification in Polyethylene Foams", JOURNAL OF CELLULAR PLASTICS, vol. 44, no. 2, 1 March 2008 (2008-03-01), pages 107-123, XP055155453, ISSN: 0021-955X, DOI: 10.1177/0021955X07081649 * table 1 * ----- | 1-4, 8-11, 13-15 | INV. C08K5/20 C08L23/00 C08L25/00 |
| X | WO 84/00553 A1 (DOW CHEMICAL CO [US]) 16 February 1984 (1984-02-16) * page 7, paragraphs 2,3; claims 1,2,6; examples 3,4; table I * ----- | 1-4,8-15 | |
| X | US 2010/267870 A1 (LI JIANG [US] ET AL) 21 October 2010 (2010-10-21) * paragraphs [0003], [0058]; claims 1,10 * ----- | 4,8-11, 13-15 | |
| X | EP 2 708 574 A1 (CLARIANT INT LTD [CH]; CLARIANT MASTERBATCHES ITALIA S P A [IT]) 19 March 2014 (2014-03-19) * paragraph [0001]; claims 1-6 * ----- | 1-4,8-15 | TECHNICAL FIELDS SEARCHED (IPC) C08K C08L |

The present search report has been drawn up for all claims

1

| Place of search | Date of completion of the search | Examiner |
|---|---|---|
| Munich | 3 December 2014 | Lohner, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 00 2123

This annex lists the patent family members relating to the patent documents cited in the above-mentioned European search report. The members are as contained in the European Patent Office EDP file on
The European Patent Office is in no way liable for these particulars which are merely given for the purpose of information.

03-12-2014

| Patent document cited in search report | Publication date | Patent family member(s) | Publication date |
|---|---|---|---|
| WO 8400553 A1 | 16-02-1984 | AU 562138 B2 | 28-05-1987 |
| | | AU 1880483 A | 23-02-1984 |
| | | CA 1233595 A1 | 01-03-1988 |
| | | DE 3369788 D1 | 19-03-1987 |
| | | EP 0114879 A1 | 08-08-1984 |
| | | GB 2126238 A | 21-03-1984 |
| | | IL 69317 A | 30-09-1986 |
| | | NZ 205023 A | 20-02-1987 |
| | | WO 8400553 A1 | 16-02-1984 |
| | | ZA 8305461 A | 27-03-1985 |
| US 2010267870 A1 | 21-10-2010 | CN 101842428 A | 22-09-2010 |
| | | EP 2205669 A1 | 14-07-2010 |
| | | JP 2011502200 A | 20-01-2011 |
| | | US 2010267870 A1 | 21-10-2010 |
| | | US 2013289176 A1 | 31-10-2013 |
| | | WO 2009058313 A1 | 07-05-2009 |
| EP 2708574 A1 | 19-03-2014 | EP 2708574 A1 | 19-03-2014 |
| | | TW 201425413 A | 01-07-2014 |
| | | WO 2014044366 A1 | 27-03-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8609744 B
- EP 2112201 A